# EUROPEAN PATENT SPECIFICATION

(11) **EP 1 322 497 B1**
(45) Date of publication and mention of the grant of the patent: **15.04.2009**
(21) Application number: 01967906.7
(22) Date of filing: 19.09.2001
(51) Int. Cl.: B60R 19/22

(54) **A BUMPER FOR A VEHICLE**
STOSSFÄNGER FÜR EIN FAHRZEUG
PARE-CHOCS DE VEHICULE

(30) Priority: 19.09.2000 SE 0003418
(43) Date of publication of application: 02.07.2003
(73) Proprietor: Gestamp HardTech Aktiebolag, 971 25 Luleå (SE)
(72) Inventor: JONSSON, Martin, S-972 42 Lule (SE)
(74) Representative: Aslund, G Roland
(86) International application number: PCT/SE2001/002003
(87) International publication number: WO 2002/024487

(56) References cited:
- WO-A1-95/20506
- WO-A1-99/20490
- DE-A1- 4 341 884
- GB-A- 2 081 653
- US-A- 4 018 466

## Description

### Technical field

This invention relates to a bumper for a vehicle, comprising a hat beam adapted to have its crown directed towards the vehicle body, a cover attached to the side flanges of the hat beam and having a longitudinal depression that extends into the hat beam and an energy absorbing foamed body that fills out the depression and extends out of the depression.

### Brief description of prior art

A bumper of this kind is known from WO 9920490.The foamed body is used to absorb energy by being compressed before the hat beam will be deformed to take up energy. The foamed body extends over the side flanges of the hat beam and the front surface of the foamed body is almost flat so that, if the bumper hits a barrier, the foam will be compressed to compactness on the side flanges and will become totally stiff while the foam therebetween will still be resilient. The foam in the middle cannot be compacted to stiffness until the beam itself has been deformed. In the above-mentioned publication, a modified bumper is also shown which has a flat cover and the foam will therefore give a more uniform resistance force when compressed.

### Object of invention and brief description of the invention

It is an object of the invention to provide a bumper beam with a foamed body that gives a more uniform load vertically on an object that is hit, for example the legs of a pedestrian, combined with a reduced horizontal extension of the entire bumper for a given strength. To this end, the longitudinal depression extends into the hat beam to a depth of between 1/10 and 1/3 of the profile height of the hat beam and the energy absorbing body that fills out the depression extends out of the depression so that 65-85 % of the depth of the foamed body is outside the hat beam and the part of the foamed body that extends out of the hat beam widens out over the side flanges and has recesses in the widened parts.
The recesses in the foamed body are so dimensioned that the foamed body adjacent the depression in the cover is compressed to full compactness before the widened parts of the foamed body adjacent the side flanges are compressed to full compactness when the bumper hits a vertical pillar.

### Brief description of the drawings

- Figure 1 shows as an example of the invention a bumper beam seen from above.
- Figure 2 is a transverse section taken along line 2-2 in figure 1.
- Figure 3 is a view taken as indicated by the arrows 3-3 in figure 2.
- Figure 4 corresponds to figure 2 but shows a modified design.

### Description of preferred embodiments of the invention

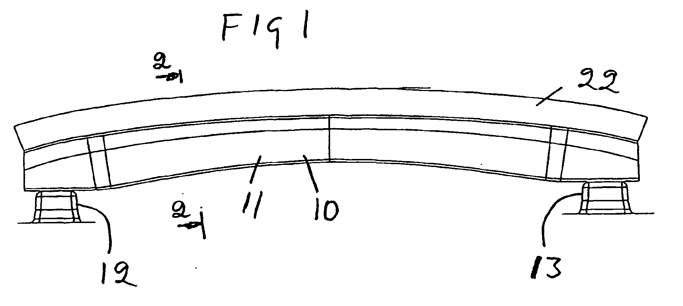

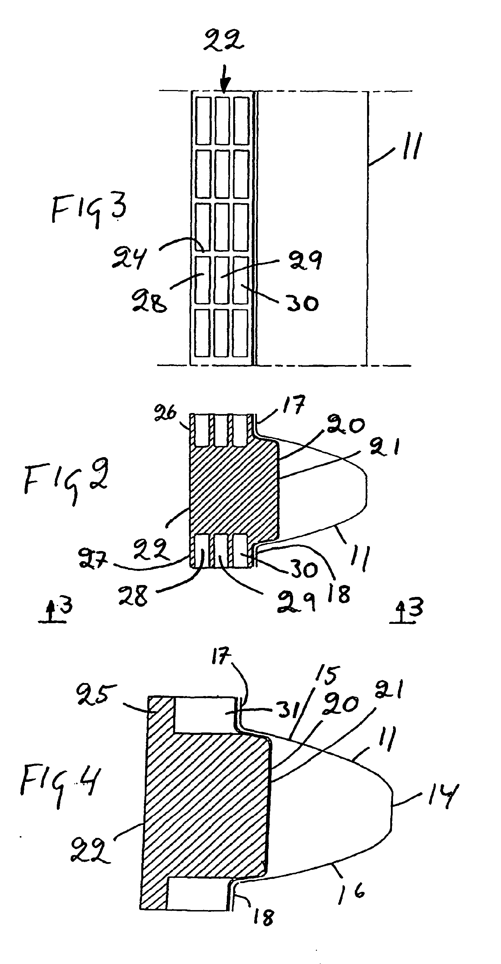

Figure 1 shows a bumper beam 10 which is fastened to two crash boxes 12,13 and the crash boxes are fastened to the vehicle body, for example to the front ends of the side rails (side beams). The bumper beam 10 is formed from sheet steel and it comprises a so-called hat beam 11 and a cover 20 as can be seen in figure 2. The hat beam 11 has a crown that comprises a top 14 (top flange) and two flanks 15,16. The flanks end in side flanges 17,18. The bumper beam is fastened in the two crash boxes 12,13 with its crown directed towards the vehicle body, for example the body of a passenger car.

The cover 20 is fastened, for example spot-welded, to the side flanges 17,18. It has a depression 21 into the beam 11 and the depression fills the entire profile width of the beam. The depression 21 has a flat bottom. A comparatively stiff foamed body 22 of an elastomeric material (a foam beam) fills the entire width of the depression and it is fastened to the bottom of the depression 21. The depression 21 extends into the hat beam 11 to a depth of between 1/10 and 1/3 of the depth (the profile height) of the hat beam and such a depression has only a minor influence on the strength of the closed beam 11,20. The energy absorbing foamed body 22 fills out the depression 21 and extends out of the depression so that 65 - 85 % of the depth of the foamed body is outside the hat beam. The depression 21 in the cover 20 will have only a minor influence on the strength of the beam 11,20 but it will make it possible to reduce the horizontal width of the entire bumper since part of the foamed body will be inside the beam 11,20. If the horizontal length available for the bumper is limited, which is usually the case, this reduction in the length of the foamed body outside the beam can be used to make the beam 11,20 bigger and thus increase the strength of the bumper without increasing the injuries of a pedestrian hit by the car.

Figures 2 and 3 show the foamed body 22 that widens and extends out over the side flanges 17,18 and reduces the load on the legs of a pedestrian hit by the car. The two widened parts 26,27 of the foamed body adjacent the side flanges 17,18 have three rows of recesses 28,29 30 so dimensioned that the part of the foamed body adjacent the depression 21 in the cover 20 will be compressed to full compactness before the parts 26,27 adjacent the side flanges are compressed to full compactness when the bumper hits for instance a vertical pillar or a flat barrier or a pedestrians leg. The recesses 28-30 are separated by thin partitions 24, which make the parts 26,27 comparatively stiff.

Figure 4 shows a foamed body, which is modified from the one in figures 2 and 3 in that it has only a single recess 31 instead of a number of rows of recesses as the one in figures 2 and 3. In this design, the partitions may be omitted since the foamed body will have a T-formed transverse section with a comparatively thick and strong flange 25

A foam suitable for use in all the embodiments may have about 30 % of its original volume when compressed to full compactness and the dimensions in the design of figure 2 as well as in the design of figure 4 should be such that the difference in compactness vertically should be less than 15% in the foamed body when any part of the foam reaches full compactness when the bumper hits a pedestrians leg which can be considered as a vertical pillar. The main part of the foamed body, that is, the part adjacent the depression 21 in the cover 20, should be fully compacted before the parts adjacent the side flanges 17,18. It is important that the foam reaches full compactness while it extends out of the beam; otherwise, the load-taking surface will be reduced to the area of the two side flanges 17,18.

## Claims

1. A bumper for a vehicle, comprising a hat beam (11) adapted to have its crown (14-16) directed towards the vehicle body,
a cover (20) attached to the side flanges (17,18) of the hat beam and having a longitudinal depression (21) that extends into the hat beam and an energy absorbing foamed body (22) that fills out the depression and extends out of the depression,
**characterised in that**
said longitudinal depression (21) extends into the hat beam to a depth of between 1/10 and 1/3 of the profile height of the hat beam
and said energy absorbing body (22) that fills out the depression extends out of the depression so that 65-85 % of the depth of the foamed body is outside the hat beam and the part of the foamed body (22) that extends out of the hat beam widens out over the side flanges and has at least one recess (28-30;31) in the widened parts (25;26,27),
and **in that** the recess or recesses (28-31) in the foamed body are so dimensioned that the foamed body adjacent the depression (21) in the cover (20) is compressed to full compactness before the widened parts (25;26,27) of the foamed body adjacent the side flanges (17,18) are compressed to full compactness when the bumper hits a vertical pillar.

## Patentansprüche

1. Stoßfänger für ein Fahrzeug, mit einem C-Profil (11), dessen Krone (14, 16) zum Fahrzeugkörper hin gerichtet ist, einer Abdeckung (20), die an den Seitenflanschen (17, 18) des C-Profils befestigt ist, und mit einer Längsvertiefung (21), die sich in das C-Profil hinein erstreckt, und einem energieaufnehmenden Schaumkörper (22), der die Vertiefung ausfüllt, und sich aus der Vertiefung heraus erstreckt,
**gekennzeichnet dadurch, dass**
besagte Längsvertiefung (21) sich in eine Tiefe zwischen 1/10 und 1/3 der Profilhöhe des C-Profils in das C-Profil hinein erstreckt und besagter energieaufnehmender Körper (22), der die Vertiefung ausfüllt, sich aus der Vertiefung heraus erstreckt, so dass 65-85 % der Tiefe des Schaumkörpers außerhalb des C-Profils liegt, und der Teil des Schaumkörpers, (22) der sich aus dem C-Profil heraus erstreckt, sich über den Seitenflanschen erweitert und mindestens eine Vertiefung (28, 30, 31) in den erweiterten Teilen (25, 26, 27) aufweist, sowie **dadurch** dass die Vertiefung oder Vertiefungen (28, 31) in dem Schaumkörper so bemessen sind, dass der Schaumkörper anliegend an die Vertiefung (21) in der Abdeckung (20) zu voller Kompaktheit komprimiert wird, bevor die erweiterten Teile (25, 26, 27) des Schaumkörpers anliegend an die Seitenflansche (17, 18) zu voller Kompaktheit komprimiert werden, wenn der Stoßfänger mit einem senkrechten Pfeiler kollidiert.

## Revendications

1. Pare-chocs de véhicule, comprenant un profilé en C (11) adapté de façon à ce que sa couronne (14-16) soit dirigée vers la carrosserie du véhicule,
une couverture (20) fixée aux bords latéraux (17, 18) du profilé en C et ayant une dépression longitudinale (21) qui s'étend dans le profilé en C et un corps en mousse pour l'absorption d'énergie (22) qui remplit la dépression, et s'étend hors de la dépression,
**caractérisé en ce que**
ladite dépression longitudinale (21) s'étend dans le profilé en C jusqu'à une profondeur de 1/10 à 1/3 de la hauteur de profil du profilé en C
et que ledit corps pour l'absorption d'énergie (22) qui remplit la dépression s'étend hors de la dépression de façon telle que 65-85 % de la profondeur du corps en mousse soit au-dehors du profilé en C, et la partie du corps en mousse (22) qui s'étend hors du profilé en C s'élargisse au-dessus des bords latéraux et ait au moins un enfoncement (28, 30, 31) dans les parties étendues (25, 26, 27),
et **en ce que** l'enfoncement ou les enfoncements (28, 31) dans le corps en mousse soient dimensionnés de manière telle que le corps en mousse qui se trouve à proximité de la dépression (21) dans la couverture (20) soit comprimé et atteigne une compacité maximum, avant que les parties étendues (25, 26, 27) du corps en mousse qui se trouve à proximité des bords latéraux (17, 18) soient comprimées et atteignent une compacité maximum quand le pare-chocs heurte un pilier vertical.
